# EUROPÄISCHE PATENTANMELDUNG

(11) **EP 4 019 458 A1**
(43) Veröffentlichungstag der Anmeldung: **29.06.2022**
(21) Anmeldenummer: 21000355.4
(22) Anmeldetag: 15.12.2021
(51) Int. Cl.: B67D 7/02, A01J 9/00, B60P 3/22, F04D 9/00

(54) **VORRICHTUNG ZUR FÖRDERUNG EINES MEDIUMS, VORZUGSWEISE MILCH**

(30) Priorität: 23.12.2020 DE 102020009971
(71) Anmelder: Bartec Benke GmbH, 94239 Gotteszell (DE)
(72) Erfinder: Süß, Alois, 94255 Böbrach (DE); Kappl, Gerhard Alois, 94239 Zachenberg (DE); Nagl, Martin, 94530 Auerbach (DE); Lerach, Dieter, 94227 Zwiesel (DE)
(74) Vertreter: Kohl, Karl-Heinz

(57) **Zusammenfassung**

Bei der Vorrichtung wird mittels wenigstens einer Pumpe Medium, vorzugsweise Milch, von einem Liefertank (1) in einen Annahmetank (2) gefördert. Die Saugseite der Pumpe (8) ist mit dem Liefertank (1) und ihre Druckseite mit dem Annahmetank (2) strömungsverbunden. Der Tank weist wenigstens eine Kammer (23 bis 25) auf, in die eine Zuführleitung (26 bis 28) mündet. Die Kammer (23 bis 25) ist mit einer Spülleitung (35 bis 37) versehen, die über die Saugseite mit der Druckseite der Pumpe (8) strömungsverbunden, ist und in der ein Sperrventil (40 bis 42) sitzt. Am Ende des Pumpvorganges wird die Spülleitung (35 bis 37) geöffnet, so dass die zum Annahmetank (2) führende Zuführleitung (26 bis 28) mittels des im Annahmetank (2) befindlichen blasen- und schaumreinen Mediums gespült werden kann.

## Beschreibung

Die Erfindung betrifft eine Vorrichtung zur Förderung eines Mediums, vorzugsweise von Milch, nach dem Oberbegriff des Anspruches 1.

In der Milchwirtschaft wird Milch von den Erzeugern, wie Bauern, zu den Verarbeitern, wie Molkereien, gefördert. Die Milch wird hierbei von einem Liefertank in einen Annahmetank gepumpt, der häufig Teil von Sammelwagen ist. Um die im Liefertank vorhandene Milch eichgenau im Annahmetank zu messen, muss die in einem Rohrleitungssystem zwischen dem Liefertank und dem Annahmetank verbleibende Milchmenge genau bekannt sein. Gerade zum Schluss der Annahme entsteht allerdings in der Milch sehr viel Luft und Schaum, der mehr oder weniger stark in dem Rohrleitungssystem zwischen der Pumpe und dem Annahmetank verbleibt. Durch die Luft und den Schaum wird die aus dem Tankinhalt und der Rohrleitungsmenge berechnete Gesamtannahmemenge verfälscht.

Der Erfindung liegt die Aufgabe zugrunde, die gattungsgemäße Vorrichtung so auszubilden, dass die im Annahmetank befindliche Menge an Medium eichgenau gemessen werden kann.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung ist der Annahmetank mit einer Spülleitung versehen, die über die Saugseite mit der Druckseite der Pumpe strömungsverbunden ist. In der Spülleitung sitzt ein Sperrventil, mit dem die Spülleitung für den Spülvorgang geöffnet werden kann. Am Ende des Pumpvorganges wird die Spülleitung geöffnet, so dass die zum Annahmetank führende Zuführleitung mittels des im Annahmetank befindlichen blasen- und schaumreinen Mediums gespült werden kann. Nach dem Spülvorgang sind die Spülleitung und die zum Annahmetank führende Zuführleitung vollständig mit reinem Medium gefüllt. Blasen und/oder Lufteinschlüsse sind nicht mehr vorhanden, so dass die Gesamtannahmemenge eichgenau erfasst wird.

Die Spülleitung ist in vorteilhafter Weise an eine Rückleitung angeschlossen, die in eine saugseitige Pumpenleitung mündet.

Die Rückleitung kann durch ein Sperrventil verschlossen werden. Mittels des Sperrventiles wird die Rückleitung erst dann geöffnet, wenn ein Spülvorgang erfolgen soll.

Vorteilhaft hat die Spülleitung kleineren Strömungsquerschnitt als die Zuführleitung.

Für den Spülvorgang ist ein großer Leitungsquerschnitt im Unterschied zur Zuführleitung nicht erforderlich.

Bei einer vorteilhaften Ausführungsform ist der Aufnahmetank mit wenigstens zwei voneinander getrennten Kammern versehen, so dass für den Spülvorgang zur Entfernung der Blasen oder Schäume der Inhalt beider Kammern herangezogen werden kann.

Besonders vorteilhaft ist es, wenn die Spülleitungen der Kammern an die Rückleitung angeschlossen sind. Dann besteht in besonders vorteilhafter Weise die Möglichkeit, einen Teil oder den ganzen Inhalt der einen Kammer in die andere Kammer umzupumpen. Dies ist beispielsweise dann der Fall, wenn die beiden Kammern unterschiedlich groß sind. Die Eichvorschriften schreiben vor, dass in die Kammer mindestens ein 10tel des Kammerinhaltes gefördert werden darf. Ist beispielsweise die kleinere Kammer nahezu voll, dann kann eine entsprechend kleine Menge aus eichgesetzlichen Gründen nicht in die größere Kammer gepumpt werden. Da die Spülleitungen beider Kammern an die gemeinsame Rückleitung angeschlossen ist, besteht in diesem Fall die Möglichkeit, das Medium aus der kleineren Kammer in die größere Kammer umzupumpen, so dass in der kleineren Kammer wieder Platz für das kleinere Mediumvolumen ist.

In vorteilhafter Weise ist der Pumpe ein Kavitations/Blasensensor vorgeschaltet. Bei der Förderung von beispielsweise Milch kann es vorkommen, dass infolge eines örtlichen Unterdruckes eine lokale Verdampfung (Kavitation) erfolgt, was zu einer Schädigung der Milch führen kann. Der Kavitations/Blasensensor verhindert in diesem Falle das Auftreten einer Kavitation.

Der Kavitations/Blasensensor erkennt, ob während des Annahmevorganges eine Schaum- und /oder Blasenbildung auftritt. Außerdem sorgt der Sensor im Falle einer Kavitation dafür, dass die Drehzahl der Pumpe verringert wird, um eine Kavitation zuverlässig zu vermeiden.

Es gibt Annahmesituationen, in denen nur eine geringe oder keine Luftblasen- und/oder Schaumbildung entsteht. Dies ist beispielsweise der Fall, wenn der Liefertank höher als der Annahmetank angeordnet ist. Dann kann das im Liefertank befindliche Medium mittels Schwerkraft nachfließen, wodurch der ansaugseitige Unterdruck reduziert wird. In diesem Falle ist ein separater Spülvorgang am Ende des Annahmevorganges über die Spülleitung nicht erforderlich.

Die Rückleitung mündet in vorteilhafter Weise vor dem Kavitations/Blasensensor in die saugseitige Pumpenleitung.

Zur Verbesserung des Annahmevorganges ist der Pumpe saugseitig ein Vakuum/Schaumbehälter vorgeschaltet, in dem das Medium zwischengespeichert wird, so dass während dieser Zeit Lufteinschlüsse und dgl. aus dem Medium austreten können.

Darüberhinaus kann der Vakuum-/Schaumbehälter dazu eingesetzt werden, sicherzustellen, dass an der Ansaugseite der Pumpe stets ausreichend Medium zur Verfügung steht. Dies ist insbesondere dann von Vorteil, wenn die Pumpe nicht selbstansaugend ausgebildet ist.

Bei einer anderen erfindungsgemäßen Ausbildung ist der Vakuum/Schaumbehälter oder der Speicherbehälter über eine Leitung mit der druckseitigen Pumpenleitung verbunden. In der Leitung sitzt ein Sperrventil, mit dem die Leitung während des Annahmevorganges geschlossen werden kann.

Zum Befüllen des Behälters wird das Sperrventil geöffnet.

Die im Behälter befindliche Mediumsmenge kann auch zum Spülen eingesetzt werden, insbesondere wenn die Spülleitung nicht verwendet werden soll oder nicht vorhanden ist. Für den Spülvorgang wird der Behälter zur saugseitigen Pumpenleitung freigegeben, so dass die Pumpe dieses Medium in die druckseitige Pumpenleitung pumpen kann.

Bei einer weiteren Ausführungsform hat eine die Vorrichtung steuernde Rechnereinheit eine Anzeige, an der die aktuelle kleinste, eichrechtliche zugelassene Messmenge angezeigt wird. Dadurch ist es möglich, auf einem Messanlagenschild keine starre minimale Messmenge mehr angeben zu müssen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

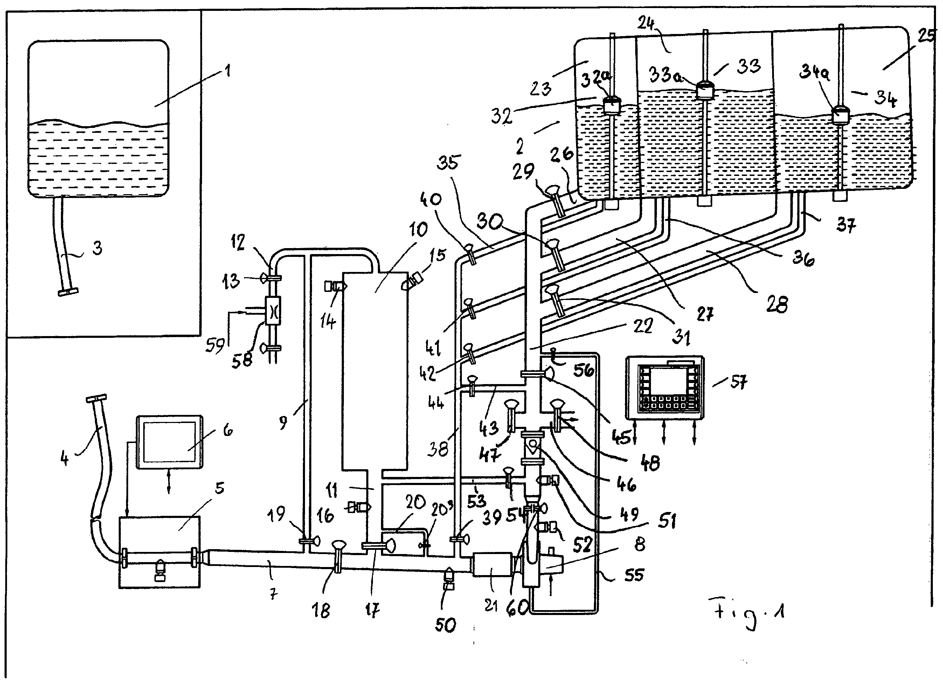

Weitere Merkmale ergeben sich aus den weiteren Ansprüchen, der Beschreibung und der Zeichnung.

Die Erfindung wird anhand eines in der Zeichnung dargestellten Ausführungsbeispieles näher erläutert.

Die Zeichnung zeigt in schematischer Darstellung eine erfindungsgemäße Vorrichtung.

Aus einem Liefertank 1 wird der Tankinhalt einem Annahmetank 2 zugeführt, der beispielsweise Teil eines Tankfahrzeuges sein kann. Die Vorrichtung wird in verschiedensten Bereichen eingesetzt, beispielsweise in der Milchwirtschaft oder beim Vertrieb von Treibstoffen.

Der Liefertank 1 hat wenigstens eine Auslassleitung 3, an die eine Saugleitung 4 angeschlossen werden kann, wenn der Inhalt des Liefertankes 1 in den Annahmetank 2 gefördert werden soll. Die Saugleitung 4 ist in der Regel ein Ansaugschlauch, über den das Medium zunächst einer Probeentnahme-Einheit 5 zugeführt wird. Sie ist bekannt und wird darum auch nicht im Einzelnen beschrieben. Sie hat ein Probeentnahmefach für die Entnahme der Mediumsprobe. Die Probeentnahme-Einheit 5 ist an einen Rechner 6 angeschlossen, mit dem die Proben erfasst und dokumentiert werden.

Die Probeentnahme-Einheit 5 ist über eine Pumpenleitung 7 an eine Pumpe 8 angeschlossen, die beispielhaft eine Kreiselpumpe ist, mit der das Medium aus dem Liefertank 1 angesaugt und dem Annahmetank 2 zugeführt wird.

Von der Pumpenleitung 7 zweigt eine Leitung 9 ab, die die Pumpenleitung 7 mit einem Vakuum- und Schaumbehälter 10 verbindet. Er kann ein Fassungsvermögen von beispielsweise von mindestens 80 Liter aufweisen.

Die Leitung 9 mündet von oben in den Behälter 10, der am Boden einen Auslass 11 aufweist, der den Behälter 10 mit der Pumpenleitung 7 verbindet.

An die Leitung 9 schließt eine Druckluft/Saugleitung 12 an, die durch ein Ventil 13 von der Leitung 9 getrennt werden kann.

Der Behälter 10 ist nahe seinem oberen Ende mit einem Drucksensor 14 und mindestens einem Milchsensor 15 versehen.

Ein weiterer Milchsensor 16 befindet sich im Auslass 11.

Der Auslass 11 des Behälters 10 kann durch ein Ventil 17 von der Pumpenleitung 7 getrennt werden. Im Bereich zwischen der Leitung 9 und dem Auslass 11 befindet sich in der Pumpenleitung 7 ein Ventil 18, mit dem die Pumpenleitung 7 bei Bedarf geschlossen werden kann.

Auch die Leitung 9 kann durch ein Ventil 19 geschlossen werden.

Eine Bypassleitung 20 verbindet den Auslass 11 mit der Pumpenleitung 7 unter Umgehung des im Auslass 11 sitzenden Ventiles 17. In der Bypassleitung 20 sitzt ein Sperrventil 20'.

Auf der Saugseite der Pumpe 8 befindet sich zusätzlich zum Behälter 10 ein Kavitations- und Blasensensor 21, der in der Pumpenleitung 7 angeordnet ist.

An die Druckseite der Pumpe 8 schließt eine Druckleitung 22 an, in der das Medium zum Annahmetank 2 gefördert wird.

Im Ausführungsbeispiel hat der Annahmetank 2 drei Kammern 23 bis 25, von denen die beiden Kammern 24, 25 gleiches Fassungsvermögen haben, beispielsweise ein Fassungsvermögen von 12.000 Liter. Die Kammer 23 hat ein kleineres Fassungsvermögen, im Ausführungsbeispiel 4.000 Liter. In den Boden der voneinander getrennten Kammern 23 bis 25 mündet jeweils eine Zuführleitung 26 bis 28, die an die zentrale Druckleitung 22 angeschlossen sind bzw. von ihr abzweigen. In jeder Zuführleitung 26 bis 28 sitzt jeweils ein Ventil 29 bis 31, mit dem der Zulauf zu den Kammern 23 bis 25 geschlossen werden kann.

In jeder Kammer 23 bis 25 befindet sich eine Peilstabanordnung 32 bis 34, mit der in bekannter Weise das Volumen des in den Kammern befindlichen Mediums erfasst werden kann.

An den Boden der Kammer 23 bis 25 ist jeweils eine Spülleitung 35 bis 37 angeschlossen, die mit einer gemeinsamen Rückleitung 38 strömungsverbunden sind. Sie mündet auf der Saugseite der Pumpe 8 in die Pumpenleitung 7 im Bereich zwischen dem Auslass 11 des Behälters 10 und dem Kavitation/Blasen-Sensor 21. In der Rückleitung 38 sitzt ein Ventil 39, mit dem die Rückleitung 38 geschlossen werden kann. Die Spülleitungen 35 bis 37 und vorteilhaft auch die Rückleitung 38 haben kleinere Förderquerschnitt als die Zuführleitungen 26 bis 28 und die Druckleitung 22.

Jede einzelne Spülleitung 35 bis 37 kann durch jeweils ein Ventil 40 bis 42 geschlossen werden.

Die Rückleitung 38 ist im Bereich zwischen der Pumpenleitung 7 und der Spülleitung 37 über eine Querleitung 43 mit der Druckleitung 22 verbunden. In der Querleitung 43 sitzt ein Ventil 44, mit dem die Querleitung 43 geschlossen werden kann. Die Querleitung 43 mündet im Bereich zwischen der Pumpe 8 und den Zuführleitungen 26 bis 28 in die Druckleitung 22.

Im Bereich zwischen der Querleitung 43 und der Zuführleitung 28 sitzt in der Druckleitung 22 ein Ventil 45, mit dem der Durchlass zu den Zuführleitungen 26 bis 28 geschlossen werden kann.

An die Druckleitung 22 kann optional eine Umpumpleitung 46 anschließen, dies sich im Bereich zwischen der Querleitung 43 und der Pumpe 8 befindet. Die Umpumpleitung 46 kann durch zwei Ventile 47, 48, die beiderseits der Druckleitung 22 liegen, geschlossen werden.

Ein Rückschlagventil 49 sitzt in der Druckleitung 22 zwischen der Umpumpleitung 46 und der Pumpe 8 und verhindert einen Rückfluss des Mediums aus dem Annahmetank 2 zur Pumpe 8.

In der Pumpenleitung 7 und in der Druckleitung 22 sitzen jeweils ein Drucksensor 50, 51.

Ein Leersensor 52 überwacht, ob die Druckleitung 22 leer ist.

Der Auslass 11 des Behälters 10 ist über eine Leitung 53 an die Druckleitung 22 angeschlossen. In der Leitung 53 sitzt ein Ventil 54, um die Leitung 53 schließen zu können. Die Leitung 53 mündet im Bereich zwischen dem Rückschlagventil 49 und der Pumpe 8 in die Druckleitung 22.

An die Druckleitung 22 schließt in Strömungsrichtung hinter der Umpumpleitung 46 eine Entleerleitung 55 an, die mit der Pumpe 8 verbunden ist und zum Entleeren der Druckleitung 22 dient. Die Leerleitung 55 kann mittels eines Ventiles 56 geschlossen werden.

Zur Steuerung der beschriebenen Vorrichtung dient eine Rechnereinheit 57 an welche die verschiedenen Sensoren und die Pumpe 8 angeschlossen sind. Auch der Rechner 6 der Probeentnahme-Einheit 5 kann in vorteilhafter Weise an die Rechnereinheit 57 angeschlossen sein.

Um das Medium aus dem Liefertank 1 in den Annahmetank 2 zu pumpen, werden die Auslassleitung 3 des Liefertanks 1 und die Saugleitung 4 miteinander verbunden. Mittels der Pumpe 8 wird das Medium über die Saugleitung 7 und die Druckleitung 22 zum Annahmetank 2 gefördert. Die Ventile 18 und 45 sowie das jeweilige Ventil 29 bis 31 sind geöffnet, so dass das Medium in die jeweilige Kammer 23 bis 25 des Annahmetankes 2 gefördert werden kann. Die Ventile 40 bis 42 in den Spülleitungen 35 bis 37 sind geschlossen.

Die Pumpe 8 ist im Ausführungsbeispiel nicht selbstansaugend, so dass dafür gesorgt werden muss, dass an der Saugseite der Pumpe 8 das Medium ansteht. Hierfür dient der Behälter 10, der zu Beginn der Förderung des Mediums aus dem Liefertank 1 mit dem Medium gefüllt wird. Hierfür sind die Ventile13, 17, 18 geöffnet, so dass das Medium aus der Saugleitung 7 in den Behälter 10 mittels eines Ejektors 58 angesaugt werden kann. Der Ejektor 58 arbeitet nach dem Venturi-Prinzip unter Einsatz von Druckluft 59, wodurch in der Leitung 12 Unterdruck entsteht. Das Medium wird aus der Saugleitung 7 über den Auslass 11 in den Behälter 10 angesaugt. Sobald an der Saugseite der Pumpe 8 genügend Medium ansteht, kann die Pumpe 8 eingeschaltet werden. Das Ventil 17 wird geschlossen, so dass das Medium im Behälter 10 gespeichert wird.

Der am saugseitigen Anschluss der Pumpe 8 vorgesehene Kavitations- und Blasensensor 21 erkennt, ob während des Annahmevorganges eine Schaum- und/oder Blasenbildung auftritt. Außerdem dient der Sensor 21 zum Erkennen bzw. Vermeiden von Kavitationen. Sobald eine Kavitation auftritt, setzt der Sensor 21 die Drehzahl der Pumpe 8 herunter, wodurch ein sehr schonender Fördervorgang erreicht wird.

Mit Hilfe des Sensors 21 wird die milchschädigende Kavitationswirkung zuverlässig vermieden. Der Sensor 21 sorgt dafür, dass die Leistung der Pumpe 8 nur so hoch ist, dass eine Kavitation gerade noch vermieden wird.

Durch Öffnen der Ventile 29 bis 31 werden die Kammern 23 bis 25 des Annahmetanks 2 in bekannter Weise gefüllt.

Um die im Liefertank 1 vorhandene Flüssigkeitsmenge mit den in den Kammern 23 bis 25 befindlichen Peilstabanordnungen 32 bis 34 eichgenau zu messen, muss die im Rohrleitungssystem verbleibende Flüssigkeitsmenge genau bekannt sein. In der Regel entsteht zum Schluss der Flüssigkeitsannahme sehr viel Luft und Schaum (insbesondere bei Milch oder Bier), was zur Folge hat, dass mehr oder weniger Luft und Schaum in der Druckleitung 22 sowie den Zuführleitungen 26 bis 28 zwischen der Pumpe 8 und dem Annahmetank 2 verbleibt. Die Luft und der Schaum verfälschen die aus dem Inhalt des Tankes 2 und der Rohrleitungsmenge berechnete Gesamtannahmemenge.

Aus diesem Grunde sind die Spülleitungen 35 bis 37 vorgesehen, mit denen am Ende des Pumpvorganges die Druckleitung 22 zum Annahmetank 2 hin mit der im Annahmetank 2 befindlichen, blasen- und schaumfreien Flüssigkeit gespült werden kann.

Die Pumpe 8 saugt bei diesem Spülvorgang die Flüssigkeit aus den Kammern 23 bis 25 an, die über die Spülleitungen 35 bis 37 sowie die Druckleitung 22 und die Zuführleitungen 26 bis 28 wieder zurück in die Kammern 23 bis 25 gefördert wird. Die entsprechenden Ventile 40 bis 42, 39, 45 und 29 bis 31 sind bei diesem Spülvorgang offen. Die eventuell im Rohrleitungssystem befindlichen Kavitationen und Schäume werden auf diese Weise in die Kammern 23 bis 25 verdrängt, so dass die Spülleitungen 35 bis 37 sowie die Druckleitung 22 und die Zuführleitungen 26 bis 28 vollständig mit reiner Flüssigkeit gefüllt sind. Daher werden Messfehler aufgrund von Blasen und/oder Lufteinschlüssen im Rohrleitungssystem sicher verhindert.

Nach Abschluss des Spülvorganges werden die entsprechenden Ventile wieder geschlossen. Sofern eine weitere Förderung von Flüssigkeit aus dem Liefertank 1 zum Annahmetank 2 nicht mehr erfolgt, werden die Ventile 29 bis 31 und die Ventile 40 bis 42 geschlossen, so dass aus dem Annahmetank 2 keine Flüssigkeit mehr in das Rohrleitungssystem gelangt.

Da der beschriebene Spülvorgang im Kreislauf erfolgt, geht keine Flüssigkeit während des Spülvorganges verloren.

Die Spülleitungen 35 bis 37 können darüberhinaus für einen Umpumpvorgang herangezogen werden.

Für die eichgenaue Messung mittels Peilstabmessung im Annahmetank 2 muss die angenommene Flüssigkeitsmenge im Liefertank größer oder gleich einem 10tel des Kammervolumens sein. Außerdem muss der Hub des Schwimmers 32a bis 34a der Peilstabanordnungen 32 bis 34 aufgrund der angenommenen Flüssigkeitsmenge größer oder gleich 20 cm sein.

Soll Flüssigkeit in die Kammern 24 und 25 gefüllt werden und diese Kammern, wie im Ausführungsbeispiel, ein Fassungsvermögen von 12.000 Liter haben, dann ist nach den eichrechtlichen Bestimmungen eine Mindestmenge von 1200 Liter vorgeschrieben. Dementsprechend ist für die kleinere Kammer 23 mit dem beispielhaften Volumen von 4000 Liter eine Mindestannahmemange von 400 Litern erforderlich.

Ist die Flüssigkeitsmenge beispielsweis kleiner als 1200 Liter und größer als 400 Liter, dann kann diese nur in der Kammer 23 untergebracht werden. Sollte die Kammer 23 bereits so weit gefüllt sein, dass die Flüssigkeitsmenge von mehr als 400 Liter nicht untergebracht werden kann, dann ist es mit Hilfe der Spülleitungen 35 bis 37 möglich, einen Teil der in der Kammer 23 befindlichen Flüssigkeitsmenge in die Kammer 24 oder 25 zu fördern, sofern dort noch ausreichend Platz ist. Auf diese Weise kann die Kammer 23 so weit entleert werden, dass die geringe Flüssigkeitsmenge nunmehr in der Kammer 23 untergebracht werden kann. Soll beispielsweise ein Teil der Flüssigkeit von der Kammer 23 in die Kammer 24 umgepumpt werden, wird das Ventil 40 geöffnet, so dass der Inhalt der Kammer 23 über die Zuführleitung 35 und die Rückleitung 38 bei geöffnetem Ventil 39 in die Pumpenleitung 7 gelangt. Mit der Pumpe 8 wird die Flüssigkeit über die Druckleitung 22 zur Zuführleitung 27 gepumpt, deren Ventil 30 geöffnet ist.

Auf diese Weise kann die Flüssigkeit zwischen den einzelnen Kammern 23 bis 25 bei Bedarf umgepumpt werden.

Es gibt Annahmesituationen, in denen nur eine geringe oder überhaupt keine Bildung von Luftblasen und/oder Schäumen entsteht. Dies ist beispielsweise der Fall, wenn der Liefertank 1 höher als der Annahmetank 2 angeordnet ist, wodurch das Medium mittels Schwerkraft nachfließen kann. Dadurch wird der ansaugseitige Unterdruck reduziert. In diesem Falle ist es nicht nötig, am Ende des Annahmevorganges noch einen separaten Spülvorgang über die Spülleitungen 35 bis 37 auszulösen. Mit dem Kavitations-/Blasensensor 21 wird zuverlässig erkannt, ob während des Annahmevorganges eine Schaum- und/oder Blasenbildung auftritt. Außerdem erkennt der Sensor 21 bereits vorhandene Kavitationen bzw. vermeidet Kavitationen, indem bei ersten Anzeichen des Auftretens einer Kavitation die Drehzahl der Pumpe 8 reduziert wird. Dadurch erfolgt der Fördergang so schonend, dass eine Kavitation nicht zu befürchten ist.

Sollte aus Kostengründen oder sonstigen Gründen eine Spülleitung nicht realisiert werden können, besteht durch den Behälter 10 die Möglichkeit, am Ende des Fördervorganges die Druckleitung 22 zum Annahmetank 2 hin mittels des im Behälter 10 befindlichen luft- und blasenfreien Mediums zu spülen. Zu diesem Zweck wird das Ventil 17 im Auslass 11 des Behälters 10 geöffnet, so dass mit der Pumpe 8 das luft- und blasenfreie Medium über die Druckleitung 22 zum Annahmetank 2 hin gepumpt werden kann. Die entsprechenden Ventile 29 bis 31 in den Zuführleitungen 26 bis 28 sind geöffnet.

Nach Beendigung dieses Spülvorganges werden die Ventile 29 bis 31 und 17 wieder geschlossen.

Bei der beschriebenen eichgenauen Messung mittels der Peilstabmessung muss der Schwimmerhub größer oder gleich 20 cm sein. Wenn der Liefertank 1 beispielhaft mit 400 Liter Medium gefüllt ist, darf dieses Medium zur eichgenauen Erfassung ausschließlich in eine Kammer gefördert werden, welche ein Gesamtvolumen kleiner oder gleich 4000 Liter aufweist. Abhängig von der Kammergeometrie kann es aber sein, dass bei dieser Menge das 20 cm-Kriterium nicht erreicht wird. Üblicherweise sind die Kammern 23 bis 25 bzw. der Annahmetank 2 als liegender Zylinder ausgeführt. Dies führt dazu, dass die gleiche Menge angenommener Flüssigkeit im unteren und im oberen Bereich des liegenden Zylinders zu einem größeren Schwimmerhub als im mittleren Bereich mit wesentlich größerem Kammerquerschnitt führt. Nun ist in den Eichvorschriften festgelegt, dass für eichfähige Flüssigkeitsmesssysteme eine kleinste eichfähige Messmenge angegeben werden muss. Diese kleinste Messmenge muss auf einem Typenschild der Messanlage angegeben werden. Bei der beschriebenen neuen Vorrichtung wird auf dem Messanlagenschild keine starre minimale Messmenge mehr angegeben. Stattdessen wird auf dem Messanlagenschild auf die Anzeige der Rechnereinheit 57 verwiesen. Dort wird die je nach Betriebssituation unterschiedliche kleinste eichrechtlich zugelassene Messmenge ständig berechnet und auf der Anzeige der Rechnereinheit 57 angegeben.

Mit Hilfe der Leitung 53 besteht die Möglichkeit, den Behälter 10 nicht mittels des Ejektors 58 zu befüllen, sondern mit der Pumpe 8. In diesem Fall wird das Ventil 54 geöffnet, so dass das Medium von der Pumpe 8 in den Behälter 10 gepumpt wird. Das Ventil 17 im Auslass 11 und das Ventil 13 sind selbstverständlich geschlossen.

Der Behälter 10 kann als einfacher Speicherbehälter ausgebildet sein, in dem das Medium zwischengespeichert wird. Es kann dann in der beschriebenen Weise für den Spülvorgang verwendet werden.

## Patentansprüche

1. Vorrichtung zur Förderung eines Mediums, vorzugsweise Milch, von einem Liefertank (1) in einen Annahmetank (2) mittels wenigstens einer Pumpe (8), deren Saugseite mit dem Liefertank (1) und deren Druckseite mit dem Annahmetank (2) strömungsverbunden sind, der wenigstens eine Kammer (23 bis 25) aufweist, in die eine Zuführleitung (26 bis 28) mündet,
**dadurch gekennzeichnet, dass** die Kammer (23 bis 25) mit einer Spülleitung (35 bis 37) versehen ist, die über die Saugseite mit der Druckseite der Pumpe (8) strömungsverbunden ist und in der ein Sperrventil (40 bis 42) sitzt.

2. Vorrichtung nach Anspruch 1,
**dadurch gekennzeichnet, dass** die Spülleitung (35 bis 37) an eine Rückleitung (38) angeschlossen ist, die in eine saugseitige Pumpenleitung (7) mündet.

3. Vorrichtung nach Anspruch 2,
**dadurch gekennzeichnet, dass** die Rückleitung (38) durch ein Sperrventil (39) verschließbar ist.

4. Vorrichtung nach einem der Ansprüche 1 bis 3,
**dadurch gekennzeichnet, dass** die Spülleitung (35 bis 37) kleineren Strömungsquerschnitt hat als die Zuführleitung (26 bis 28).

5. Vorrichtung nach einem der Ansprüche 1 bis 4,
**dadurch gekennzeichnet, dass** der Annahmetank (2) mindestens zwei voneinander getrennte Kammern (23 bis 25) aufweist, in die jeweils eine Zuführleitung (26 bis 28) und eine Spülleitung (35 bis 37) münden.

6. Vorrichtung nach Anspruch 5,
**dadurch gekennzeichnet, dass** die Spülleitungen (35 bis 37) der Kammern (23 bis 25) an die Rückleitung (38) angeschlossen sind.

7. Vorrichtung nach einem der Ansprüche 1 bis 6,
**dadurch gekennzeichnet, dass** der Pumpe (8) ein Kavitations/Blasensensor (21) vorgeschaltet ist.

8. Vorrichtung nach Anspruch 7,
**dadurch gekennzeichnet, dass** die Rückleitung (38) vor dem Kavitations/Blasensensor (21) in die saugseitige Pumpenleitung (7) mündet.

9. Vorrichtung nach einem der Ansprüche 1 bis 8,
**dadurch gekennzeichnet, dass** der Pumpe (8) saugseitig ein Vakuum/Schaumbehälter (10) vorgeschaltet ist.

10. Vorrichtung nach Anspruch 9,
**dadurch gekennzeichnet, dass** der Vakuum/Schaumbehälter (10) mit einer Ansaughilfe (58) versehen ist.

11. Vorrichtung, insbesondere nach einem der Ansprüche 1 bis 10, mit wenigstens einer Pumpe (8), deren Saugseite mit dem Liefertank (1) und deren Druckseite mit dem Annahmetank (2) strömungsverbunden sind, der wenigstens eine Kammer (23 bis 25) aufweist, in die eine Zuführleitung (26 bis 28) mündet, und mit wenigstens einem der Pumpe (8) saugseitig vorgeschalteten Speicherbehälter (10),
**dadurch gekennzeichnet, dass** der Speicherbehälter (10) über wenigstens eine Leitung (53), die durch ein Sperrventil (54) absperrbar ist, mit der druckseitigen Pumpenleitung (22) verbunden ist.

12. Vorrichtung nach Anspruch 11,
**dadurch gekennzeichnet, dass** der Speicherbehälter (10) einen Auslass (11) aufweist, an den die Leitung (53) angeschlossen ist.

13. Vorrichtung nach Anspruch 11 oder 12,
**dadurch gekennzeichnet, dass** der Speicherbehälter (10) ein Vakuum/Schaumbehälter ist.

14. Vorrichtung nach einem der Ansprüche 1 bis 13,
**dadurch gekennzeichnet, dass** die Vorrichtung an eine Rechnereinheit (57) angeschlossen ist.

15. Vorrichtung, insbesondere nach Anspruch 14,
**dadurch gekennzeichnet, dass** an einer Anzeige der Rechnereinheit (57) die aktuelle kleinste, eichrechtlich zugelassene Messmenge angezeigt wird.
